# EUROPEAN PATENT SPECIFICATION

(11) **EP 2 872 766 B1**
(45) Date of publication and mention of the grant of the patent: **28.06.2017**
(21) Application number: 13725180.7
(22) Date of filing: 02.05.2013
(51) Int. Cl.: F02D 19/06, F02M 21/02

(54) **METHOD FOR OPERATING A DUAL FUEL ENGINE**
VERFAHREN ZUM BETREIBEN EINES MOTORS MIT ZWEI BRENNSTOFFEN
MÉTHODE DE FONCTIONNEMENT D'UN MOTEUR BI-CARBURANT

(30) Priority: 11.05.2012 FI 20125506
(43) Date of publication of application: 20.05.2015
(73) Proprietor: Wärtsilä Finland Oy, 65380 Vaasa (FI)
(72) Inventor: NUORMALA, Kimmo, FI-65280 Vaasa (FI); FORS, Patrik, FI-65300 Vaasa (FI); PORTIN, Kaj, FI-65300 Vaasa (FI); GRÖNLUND, Tore, FI-65610 Mustasaari (FI); HÄGGDAHL, Tore, FI-65610 Smedsby (FI)
(74) Representative: Berggren Oy, Helsinki & Oulu
(86) International application number: PCT/FI2013/050483
(87) International publication number: WO 2013/167799

(56) References cited:
- WO-A1-99/45256
- DE-A1- 10 353 141
- DE-A1-102006 025 259
- US-A1- 2011 017 174

## Description

The invention relates to a method for removing excess air from a gas receiver of a dual fuel reciprocating engine before changing fuel mode from a liquid fuel mode to a gas mode. The invention also relates to a gas feed system for a dual fuel engine.

A dual fuel engine can typically operate in two modes. In a liquid fuel mode liquid fuel, such as diesel fuel, is injected directly into an engine cylinder or a precombustion chamber as the sole source of energy during combustion. In a gas mode a gaseous fuel, such as natural gas, is mixed with air in an intake port of a cylinder and a small amount of liquid pilot fuel is injected into the cylinder or the precombustion chamber in order to ignite the mixture of air and gaseous fuel. In gas mode the gaseous fuel is injected into intake ports through gas injection valves, which are positioned between a gas receiver and the intake port of each cylinder. In some dual fuel engines the gaseous fuel is injected directly into the cylinder before or after the liquid pilot fuel.

When the dual fuel engine is running in liquid fuel mode, engine charge air may leak into the gas receiver through the gas injection valves. In order to remove excess charge air from the gas receiver before switching to gas mode, the gas receiver is provided with a gas ventilation valve, via which the accumulated charge air can be vented to the atmosphere. During the venting of the charge air also some gaseous fuel escapes to the atmosphere. Since unburned methane is a strong greenhouse gas, it is desirable to minimize the amount of escaping methane.

An object of the present invention is to provide an improved method for removing excess air from a gas receiver of a duel fuel engine before changing fuel mode from a liquid fuel mode to a gas mode. The object of the invention is also to provide an improved gas feed system for a dual fuel engine.

The object of the present invention can be achieved by a method and a system according to respective independent claims.

The dual fuel reciprocating engine comprises a separate gas feed valve for each engine cylinder, which gas feed valve is arranged to feed gaseous fuel from the gas receiver into an inlet port of an engine cylinder during the gas mode operation. In the method according to the invention liquid fuel is fed into the engine cylinders and gaseous fuel is fed from a gas source into the gas receiver via a gas inlet line. Before changing fuel mode from the liquid fuel mode to the gas mode at least one gas feed valve is opened for removing air from the gas receiver.

The gas feed system according to the invention comprises a gas receiver for receiving gaseous fuel from a gas source, a gas inlet line for feeding gas from the gas source into the gas receiver, which gas inlet line is provided with a shut-off valve for opening and closing flow communication between the gas source and the gas receiver. The gas feed system further comprises a separate gas feed valve for each engine cylinder, which gas feed valve is arranged to feed gaseous fuel from the gas receiver into an inlet port of the cylinder during the gas mode operation, and a control unit that is, before changing fuel mode from a liquid fuel mode to a gas mode, configured to open the shut-off valve and open at least one gas feed valve for removing air from the gas receiver.

By means of the invention the amount methane released to the atmosphere can be reduced. Instead, methane is utilized in the combustion process of the engine. The system according to the invention can be easily installed or retrofitted to the dual fuel engines, as only minor modifications are required to the existing system.

In the following the invention will be described by way of examples with reference to the accompanying drawings, in which
Fig. 1 shows schematically a gas feed system for a dual fuel engine, in which cylinders are arranged in a single bank.
Fig. 2 shows schematically a gas feed system for a dual fuel engine, in which cylinders are arranged in two banks.
Fig. 3 shows schematically another gas feed system for a dual fuel engine, in which cylinders are arranged in two banks.
Fig. 4 shows schematically a third gas feed system for a dual fuel engine, in which cylinders are arranged in two banks.

The drawings show a gas feed system 7 of a duel fuel reciprocating engine 4. The dual fuel engine can operate in two modes. In a liquid fuel mode a liquid fuel, such as diesel or heavy fuel oil, is injected directly into an engine cylinders 1 as a sole source of energy during combustion. In a gas mode (or a dual fuel mode) a gaseous fuel, such as natural gas, is mixed with combustion air in intake ports 10 of the cylinders 1 and a small amount of liquid pilot fuel is injected into the cylinders 1 in order to ignite the mixture of air and gaseous fuel. Typically, the pilot fuel consumption in the gas mode is less than 5% of the total fuel consumption. The dual fuel engine can be switched over from the gas mode to the liquid fuel mode and vice versa during the engine operation.

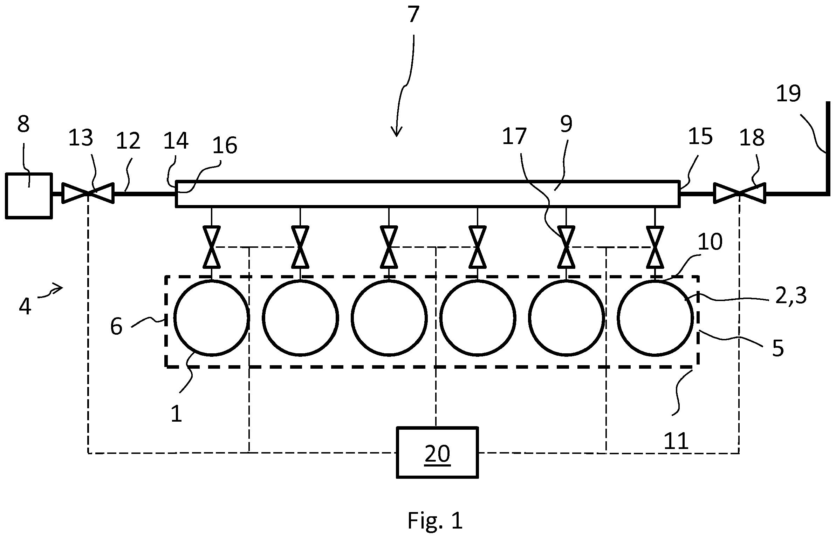

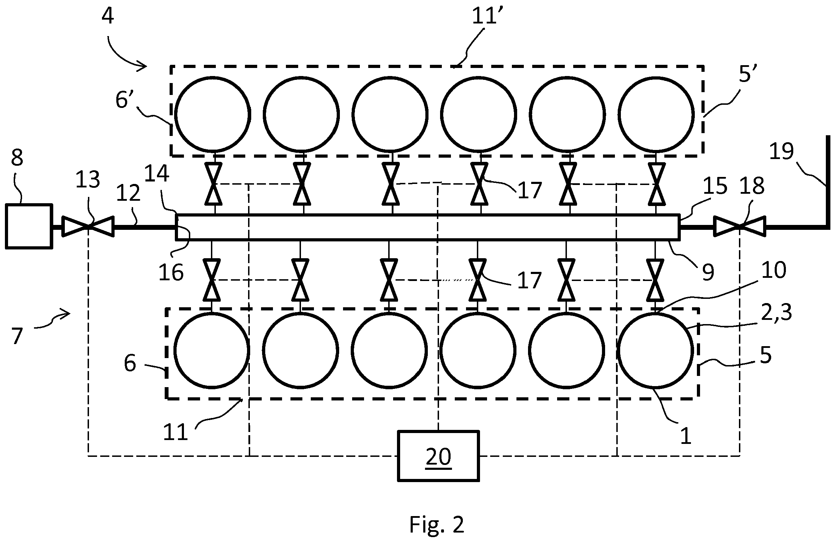

The engine 4 is a large reciprocating engine, which can be used as a main and/or an auxiliary engine in ships and/or in power plants for generation of electricity and/or heat. The engine is a medium speed, four-stroke engine. The rotational speed of the engine is 300-1200 rpm. Cylinders 1 of the engine can be arranged in a single bank 11 (embodiment of fig. 1) or in two banks 11, 11' in a V-configuration (embodiments of figs. 2-4).

The engine 4 comprises a gas feed system 7 for feeding gaseous fuel from a gas source 8, such as a gas tank, into the cylinders 1. The gas feed system 7 comprises a gas receiver 9 for receiving gaseous fuel from the gas source 8. The gas receiver 9 is used for storing gaseous fuel before conducting into inlet ports 10 of the cylinders 1. The gas receiver 9 can be an elongated tank, which is parallel to the cylinder bank 11, 11'. The gas feed system 7 further comprises a gas inlet line 12 for connecting the gas source 8 to the gas receiver 9. The gas inlet line 12 is provided with a shut-off valve 13 for opening and closing flow communication between the gas source 8 and the gas receiver 9.

The gas feed system 7 further comprises a separate gas feed valve 17 for each cylinder 1. The gas feed valve 17 is arranged to feed gaseous fuel from the gas receiver 9 into the inlet port 10 of the cylinder during the gas mode operation of the engine. The gas feed system 7 comprises a ventilation line 19 for discharging gaseous fuel from the gas receiver 9 and/or for depressurizing the gas receiver 9. The ventilation line 19 is provided with a ventilation valve 18 for allowing and preventing the discharge of the gaseous fuel from the gas receiver 9. The gas feed system 7 comprises a control unit 20, which is configured to operate the shut-off valve 13 and gas feed valves 17 in a desired manner.

When the engine is operated in the liquid fuel mode, the gas receiver 9 is depressurized by opening the ventilation valve 18 and keeping the shut-off valve 13 closed. When the pressure in the gas receiver 9 has fallen to a desired level, the ventilation valve 18 is closed. During the liquid fuel mode operation, liquid fuel is fed directly into the cylinders 1. Before switching over from the liquid fuel mode to the gas mode, air that has been leaked into the gas receiver 9 through the gas feed valves 17 must be removed. The air removal is performed during the liquid fuel mode operation such that the shut-off valve 13 is opened and thereafter at least one gas feed valve 17 is opened for removing air from the gas receiver 9. When the gas feed valve 17 is open, air flows from the gas receiver 9 into the cylinder 1 through the inlet port 10. At the same time, the gas receiver 9 is filled with gaseous fuel, which is conducted from the gas source 8 via the gas inlet line 12.

According to an embodiment of the invention, at least one gas feed valve 17 of the cylinders 1, which are located between the longitudinal midpoint of the cylinder bank 11, 11' and the cylinder bank 11, 11' end 5, 5' that is farthest away from a gas feed point 16 of the gas inlet line 12, is opened for removing excess air from the gas receiver 9.

Typically, the gas feed valve 17, which is farthest away from the gas feed point 16 of the gas inlet line 12, is opened. For enhancing the air removal from the gas receiver 9, the gas feed valve 17, which is second farthest away from the gas feed point 16 of the gas feed line 12, can additionally or alternatively be opened. If the cylinders 1 are arranged in two banks 11, 11', the cylinders 1, whose gas feed valves 17 can be opened during the air removal of the gas receiver 9, are located at the same ends 5, 5' of both cylinder banks 11, 11'.

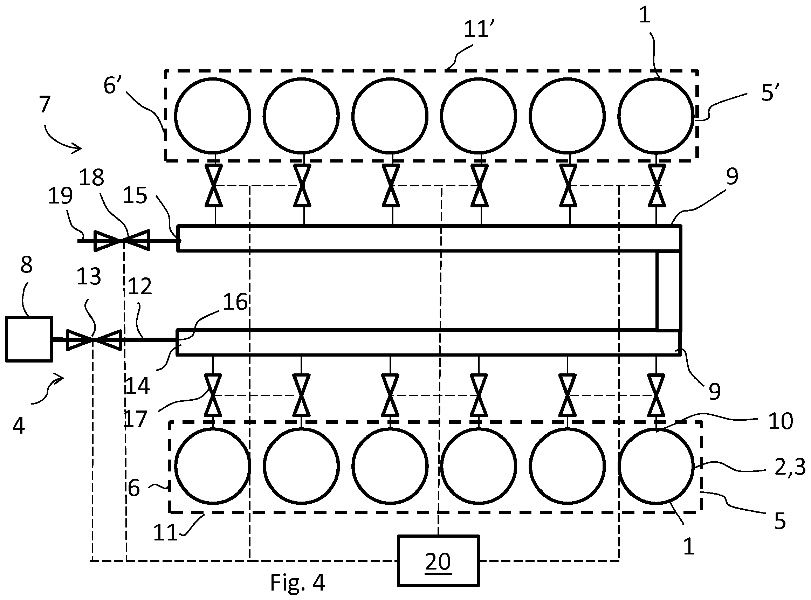

In the embodiments according to the invention, the distance between the gas feed valve 17 and the gas feed point 16 is defined along the flow path of gas in the gas receiver 9. Thus, e.g. in the embodiment of fig. 4 the gas feed valve 17 of the cylinder 1 at the first end 6' of the second cylinder bank 11' is farthest away from the gas feed point 16 of the gas inlet line 12.

The control unit 20 is configured to monitor combustion event in the cylinder 1, whose gas feed valve 17 is opened during the air removal of the gas receiver 9. When the monitoring indicates that gaseous fuel having an air concentration below a predetermined level is discharged from the gas receiver 9, the engine is ready for a change of fuel mode from the liquid fuel mode to the gas mode. The monitoring of the combustion event can be based on knocking level and/or cylinder pressure and/or exhaust gas temperature measurement of said cylinder 1. The control unit 20 receives signals from the knocking sensor 2 and/or cylinder pressure sensor 3 and/or exhaust gas temperature sensor of said cylinder 1 and determines the knocking level and/or cylinder pressure and/or exhaust gas temperature from the signals. The decrease in knocking level and increase in cylinder pressure and exhaust gas temperature indicate that the air content of gaseous fuel discharged from the gas receiver 9 decreases. When the knocking level and/or cylinder pressure and/or exhaust gas temperature reaches a predetermined value, the air content of the gaseous fuel is below a predetermined level. Now, the engine is ready for a fuel mode change from the liquid fuel mode to the gas mode. The correlation between the air content of the gaseous fuel and the knocking level, cylinder pressure and exhaust gas temperature can be defined experimentally.

Alternatively, the gas feed valve 17 can be kept open for a predetermined period of time during the air removal of the gas receiver 9. After this period, the engine is ready for a fuel mode change from the liquid fuel mode to the gas mode.

In the embodiment of fig. 1, the gas inlet line 12 is connected to the first end 14 of the gas receiver 9. Thus, the gas feed point 16 of the gas inlet line 12 is located at the first end 14 of the gas receiver 9. The vent line 19 is connected to the second end 15 of the gas receiver 9. The cylinder 1, whose gas feed valve 17 is opened during the air removal of the gas receiver 9, is located at the second end 5 of the cylinder bank 11. The second end 5 is located further from the gas feed point 16 than the first end 6 of the cylinder bank 11. Additionally, the gas feed valve 17 of the cylinder 1, which is second farthest away from the gas feed point 16, can be opened during the air removal from the gas receiver 9. In this manner, the air removal from the gas receiver 9 can be enhanced.

In the embodiment shown in fig 1, the gas feed point 16 of the gas inlet line 12 can be located between the ends 14, 15 of the gas receiver 9, for example between the gas feed valves 17 of two cylinders 1 that are in the middle of the cylinder bank 11. In this case, the fuel feed valves 17 of the cylinders 1 at both ends 5, 6 of the cylinder bank 11 are opened during the air removal.

Fig. 2 discloses an embodiment, in which the cylinders 1 are arranged in two banks 11, 11' in a V-configuration. The gas feed system 7 comprises with a gas receiver 9, from which gas can be conducted into the cylinders 1 of both the first cylinder bank 11 and the second cylinder bank 11'. The gas receiver 9 is placed between the cylinder banks 11, 11'. The gas inlet line 12 is connected to the first end 14 of the gas receiver 9. Thus, the gas feed point 16 of the gas inlet line 12 is located at the first end 14 of the gas receiver 9. The gas feed valve 17, which is farthest away from the gas feed point 16, is located at the second end 5 of the first cylinder bank 11 or at the second end 5' of the second cylinder bank 11'. The second ends 5, 5' are located further away from the gas feed point 16 than the first ends 6, 6' of the cylinder banks 11, 11'. Alternatively, the gas feed valves 17 of the cylinders 1 at the second ends 5, 5' of both cylinder banks 11, 11' can be opened during the air removal.

Also in the embodiment shown in fig 2, the gas feed point 16 of the gas inlet line 12 can be located between the ends 14, 15 of the gas receiver 9, for example between the gas feed valves 17 of the cylinders 1 that are in the middle of the cylinder bank 11, 11'. In this case, the fuel feed valves 17 of the cylinders 1 at both ends of one or both cylinder banks 11, 11' are opened during the air removal.

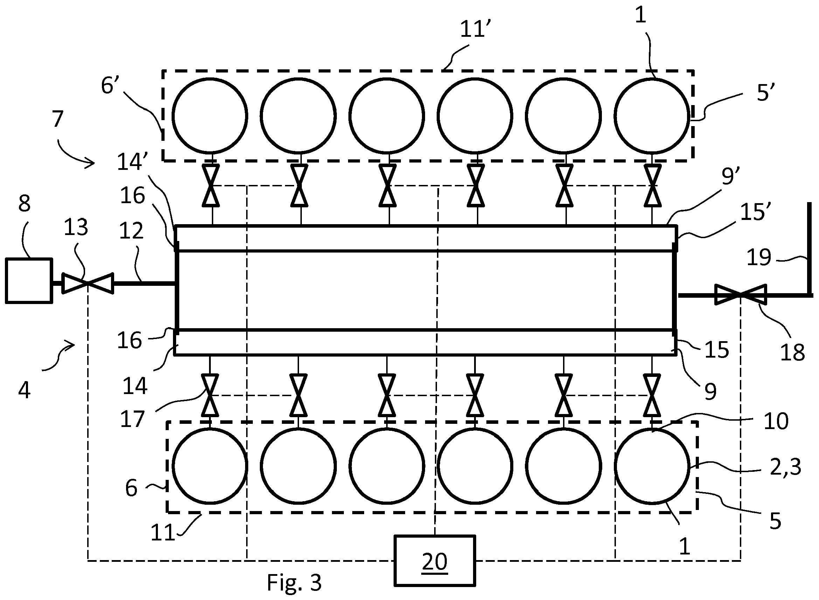

Fig. 3 discloses an embodiment, in which the cylinders 1 are arranged in two banks 11, 11' in a V-configuration. The gas feed system 7 comprises two gas receivers 9, 9', from which gaseous fuel can be conducted into the cylinders 1 of the first cylinder bank 11 and the second cylinder bank 11'. The gas receivers 9, 9' are placed between the cylinder banks 11, 11'. The gas inlet line 12 is connected to the first ends 14, 14' of the gas receivers 9, 9'. The venting line 19 is connected to the second ends 15, 15'of the gas receivers 9, 9'. Alternatively, each gas receiver 9, 9' can be provided with its own venting line 19. In the embodiment of fig. 3, the gas feed valves 17, which are farthest away from the gas feed point 16, are located at the second end 5 of the first cylinder bank 11 and at the second end 5' of the second cylinder bank 11'. The second ends 5, 5' are located further away from the gas feed point 16 than the first ends 6, 6' of the cylinder banks 11, 11'.

Fig. 4 discloses an embodiment, in which the cylinders 1 are arranged in two banks 11, 11' in a V-configuration. The gas feed system 7 comprises an U-shaped gas receiver 9, which is placed between the first cylinder bank 11 and the second cylinder bank 11'. The gas inlet line 12 is connected to the first end 14 of the gas receiver 9. The venting line 19 is connected to the second end 15 of the gas receiver 9. In this embodiment, the gas feed valve 17, which is farthest away from the gas feed point 16 of the gas inlet line 12, is located at the first end 6' of the second cylinder bank 11'.

In the above embodiments, one or more gas feed valves 17 are opened and the other gas feed valves 17 are kept closed during the air removal of the gas receiver 9. Typically, the gas feed valve 17, which farthest away from the gas feed point 16 of the gas inlet line 12, is nearest to the inlet of the gas ventilation line 19.

## Claims

1. A method for removing excess air from a gas receiver (9) of a dual fuel reciprocating engine before changing fuel mode from a liquid fuel mode to a gas mode, which dual fuel reciprocating engine comprises a separate gas feed valve (17) for each engine cylinder (1), which gas feed valve (17) is arranged to feed gaseous fuel from the gas receiver (9) into an inlet port (10) of an engine cylinder (1) during the gas mode operation,
in which method:
- liquid fuel is fed into the cylinders (1),
- gaseous fuel is fed from a gas source (8) into the gas receiver (9) via a gas inlet line (12), **characterized in that** before changing fuel mode from the liquid fuel mode to the gas mode at least one gas feed valve (17) is opened for removing air from the gas receiver (9) and the other gas feed valves (17) are kept closed.

2. The method according to claim 1, **characterized in that** at least one gas feed valve (17) of the cylinders (1), which are located between a longitudinal midpoint of the cylinder bank (11, 11') and a cylinder bank (11, 11') end (5) that is farthest away from a gas feed point (16) of the gas inlet line (12), is opened.

3. The method according to claim 1 or 2, **characterized in that** the gas feed valve (17), which is farthest away from the gas feed point (16) of the gas inlet line (12), is opened.

4. The method according to claim 1, 2 or 3, **characterized in that** the gas feed valve (17), which is second farthest away from the gas feed point (16) of the gas inlet line (12), is opened.

5. The method according to claim 1, 2 or 3, **characterized in that** the cylinders (1) of the engine are arranged in at least one cylinder bank (11, 11'), and that the cylinder (1), whose gas feed valve (17) is opened, is located at a first end (6, 6') of the cylinder bank (11, 11').

6. The method according to claim 5, **characterized in that** the gas feed valve (17) of the cylinder (1) that is located at a second end (5, 5') of the cylinder bank (11, 11) is additionally opened.

7. The method according to any of the preceding claims, **characterized in that** the gas feed valve (17) is kept open for a predetermined period of time during the air removal of the gas receiver (9), after which the engine is ready for a fuel mode change from the liquid fuel mode to the gas mode.

8. The method according to any of claims 1-6, **characterized in that** combustion event in the cylinder (1), whose gas feed valve (17) is opened during the air removal of the gas receiver (9), is monitored, and when the monitoring indicates that gaseous fuel having an air concentration below a predetermined level is discharged from the gas receiver (9), the engine is ready for a change of fuel mode from the liquid fuel mode to the gas mode.

9. The method according to any of the preceding claims, **characterized in that** the cylinders (1) of the engine are arranged in two cylinder banks (11, 11'), and that the cylinders (1), whose gas feed valves (17) are opened, are located at the same ends (5, 5') of both cylinder banks (11, 11').

10. A gas feed system (7) for a dual fuel reciprocating engine capable of operating both in a gas mode and in a liquid fuel mode, the gas feed system (7) comprising:
- a gas receiver (9) for receiving gaseous fuel from a gas source (8),
- a gas inlet line (12) for feeding gas from the gas source (8) into the gas receiver (9), which gas inlet line (12) is provided with a shut-off valve (13) for opening and closing flow communication between the gas source (8) and the gas receiver (9),
- a separate gas feed valve (17) for each engine cylinder (1), which gas feed valve (17) is arranged to feed gaseous fuel from the gas receiver (9) into an inlet port (10) of the cylinder (1) during the gas mode operation, **characterized in that** the gas feed system (7) further comprises a control unit (20) that is, before changing fuel mode from a liquid fuel mode to a gas mode, configured to:
- open the shut-off valve (13), and
- open at least one gas feed valve (17) for removing air from the gas receiver (9) and keep the other gas feed valves (17) closed.

11. The gas feed system according to claim 10, **characterized in that** the control unit (20) is configured to monitor combustion event in the cylinder (1), whose gas feed valve (17) is opened during the air removal of the gas receiver (9), and to prepare for a change of fuel mode from the liquid fuel mode to gas mode when the monitoring indicates that gaseous fuel having an air concentration below a predetermined level is discharged from the gas receiver (9).

12. The system according to claim 10 or 11, **characterized in that** the gas feed point (16) of the gas inlet line (12) is located at an end (14) of the gas receiver (9).

## Patentansprüche

1. Verfahren zum Entfernen von Luftüberschuss aus einem Gasbehälter (9) eines Dualkraftstoffkolbenmotors vor dem Wechsel des Kraftstoffmodus von einem Flüssigkraftstoffmodus in einen Gasmodus, wobei der Dualkraftstoffkolbenmotor ein separates Gasspeiseventil (17) für jeden Motorzylinder (1) umfasst und das Gasspeiseventil (17) ausgeführt ist, während des Gasmodusbetriebs gasförmigen Kraftstoff vom Gasbehälter (9) in eine Einlassöffnung (10) eines Motorzylinders (1) zuzuführen,
wobei bei dem Verfahren:
- Flüssigkraftstoff in die Zylinder (1) zugeführt wird,
- gasförmiger Kraftstoff von einer Gasquelle (8) in den Gasbehälter (9) über eine Gaseinlassleitung (12) zugeführt wird, **dadurch gekennzeichnet, dass** vor dem Wechsel des Kraftstoffmodus von dem Flüssigkraftstoffmodus in den Gasmodus mindestens ein Gasspeiseventil (17) geöffnet wird, um Luft aus dem Gasbehälter (9) zu entfernen, und die anderen Gasspeiseventile (17) geschlossen gehalten werden.

2. Verfahren nach Anspruch 1, **dadurch gekennzeichnet, dass** mindestens ein Gasspeiseventil (17) der Zylinder (1), die sich zwischen einem Längsmittelpunkt der Zylinderbank (11, 11') und einem Zylinderbank- (11, 11') -Ende (5) befinden, das von einem Gaseinspeisepunkt (16) der Gaseinlassleitung (12) am weitesten entfernt ist, geöffnet ist.

3. Verfahren nach Anspruch 1 oder 2, **dadurch gekennzeichnet, dass** das Gasspeiseventil (17), das vom Gaseinspeisepunkt (16) der Gaseinlassleitung (12) am weitesten entfernt ist, geöffnet ist.

4. Verfahren nach Anspruch 1, 2 oder 3 **dadurch gekennzeichnet, dass** das Gasspeiseventil (17), das vom Gaseinspeisepunkt (16) der Gaseinlassleitung (12) am zweitweitesten entfernt ist, geöffnet ist.

5. Verfahren nach Anspruch 1, 2 oder 3, **dadurch gekennzeichnet, dass** die Zylinder (1) des Motors in mindestens einer Zylinderbank (11, 11') angeordnet sind, und dass sich der Zylinder (1), dessen Gasspeiseventil (17) geöffnet ist, an einem ersten Ende (6, 6') von der Zylinderbank (11, 11') befindet.

6. Verfahren nach Anspruch 5, **dadurch gekennzeichnet, dass** das Gasspeiseventil (17) des Zylinders (1), der sich an einem zweiten Ende (5, 5') von der Zylinderbank befindet (11, 11), zusätzlich geöffnet ist.

7. Verfahren nach einem der vorstehenden Ansprüche, **dadurch gekennzeichnet, dass** das Gasspeiseventil (17) für einen vorbestimmten Zeitraum während des Entfernens der Luft des Gasbehälters (9) offen gehalten wird, wonach der Motor für einen Kraftstoffmoduswechsel von dem Flüssigkraftstoffmodus in den Gasmodus bereit ist.

8. Verfahren nach einem der Ansprüche 1 bis 6, **dadurch gekennzeichnet, dass** der Verbrennungsvorgang im Zylinder (1), dessen Gasspeiseventil (17) während des Entfernens der Luft des Gasbehälters (9) geöffnet ist, überwacht wird, und wenn die Überwachung anzeigt, dass gasförmiger Kraftstoff mit einer Luftkonzentration unteren einem vorbestimmten Niveau vom Gasbehälter (9) abgegeben wird, der Motor für einen Kraftstoffmoduswechsel von dem Flüssigkraftstoffmodus in den Gasmodus bereit ist.

9. Verfahren nach einem der vorstehenden Ansprüche, **dadurch gekennzeichnet, dass** die Zylinder (1) des Motors in zwei Zylinderbänken (11, 11') angeordnet sind, und dass sich die Zylinder (1), deren Gasspeiseventile (17) geöffnet sind, an den gleichen Enden (5, 5') von beiden Zylinderbänken (11, 11') befinden.

10. Gaszufuhrsystem (7) für einen Dualkraftstoffkolbenmotor, das fähig ist, sowohl in einem Gasmodus als auch in einem Flüssigkraftstoffmodus zu arbeiten, wobei das Gaszufuhrsystem (7) umfasst:
- einen Gasbehälter (9) zum Aufnehmen von gasförmigem Kraftstoff von einer Gasquelle (8),
- eine Gaseinlassleitung (12) zum Zuführen von Gas von der Gasquelle (8) in den Gasbehälter (9), wobei die Gaseinlassleitung (12) mit einem Absperrventil (13) zum Öffnen und Schließen einer Strömungsverbindung zwischen der Gasquelle (8) und dem Gasbehälter (9) versehen ist,
- ein separates Gasspeiseventil (17) für jeden Motorzylinder (1), wobei das Gasspeiseventil (17) ausgeführt ist, während des Gasmodusbetriebs gasförmigen Kraftstoff vom Gasbehälter (9) in eine Einlassöffnung (10) des Zylinders (1) zuzuführen, **dadurch gekennzeichnet, dass** das Gaszufuhrsystem (7) weiter eine Steuereinheit (20) umfasst, die vor dem Wechseln des Kraftstoffmodus von einem Flüssigkraftstoffmodus in einen Gasmodus konfiguriert ist:
- das Absperrventil (13) zu öffnen und
- mindestens ein Gasspeiseventil (17) zu öffnen, um Luft aus dem Gasbehälter (9) zu entfernen, und die anderen Gasspeiseventile (17) geschlossen zu halten.

11. Gaszufuhrsystem nach Anspruch 10, **dadurch gekennzeichnet, dass** die Steuereinheit (20) konfiguriert ist, den Verbrennungsvorgang im Zylinder (1) zu überwachen, dessen Gasspeiseventil (17) während des Entfernens der Luft des Gasbehälters (9) geöffnet ist, und einen Wechsel des Kraftstoffmodus von dem Flüssigkraftstoffmodus in den Gasmodus vorzubereiten, wenn die Überwachung anzeigt, dass gasförmiger Kraftstoff mit einer Luftkonzentration unter einem vorbestimmten Niveau aus dem Gasbehälter (9) abgegeben wird.

12. System nach Anspruch 10 oder 11, **dadurch gekennzeichnet, dass** sich der Gaseinspeisepunkt (16) der Gaseinlassleitung (12) an einem Ende (14) des Gasbehälters (9) befindet.

## Revendications

1. Procédé destiné à retirer l'air en excès d'un récepteur de gaz (9) d'un moteur alternatif à système de carburation mixte, avant de changer de mode de carburant d'un mode carburant liquide à un mode gaz, lequel moteur alternatif à système de carburation mixte comprend une soupape d'alimentation de gaz (17) séparée pour chaque cylindre (1) du moteur, laquelle soupape d'alimentation de gaz (17) est agencée pour alimenter du fluide gazeux à partir du récepteur de gaz (9) vers l'intérieur d'un port d'entrée (10) d'un cylindre (1) du moteur pendant le fonctionnement en mode gaz,
dans lequel procédé :
- du carburant liquide est alimenté dans les cylindres (1),
- du carburant gazeux est alimenté à partir d'une source de gaz (8) dans le récepteur de gaz (9) par le biais d'une ligne d'entrée de gaz (12), **caractérisé en ce qu'**avant de changer de mode de carburant du mode carburant liquide au mode gaz, au moins une soupape d'alimentation de gaz (17) est ouverte pour retirer l'air du récepteur de gaz (9) et les autres soupapes d'alimentation de gaz (17) sont maintenues fermées.

2. Procédé selon la revendication 1, **caractérisé en ce qu'**au moins une soupape d'alimentation de gaz (17) des cylindres (1), qui sont situés entre un point médian longitudinal de la rangée de cylindres (11, 11') et une extrémité (5) de la rangée de cylindres (11, 11') qui est la plus éloignée d'un point d'alimentation de gaz (16) de la ligne d'entrée de gaz (12), est ouverte.

3. Procédé selon la revendication 1 ou 2, **caractérisé en ce que** la soupape d'alimentation de gaz (17) qui est la plus éloignée du point d'alimentation de gaz (16) de la ligne d'entrée de gaz (12), est ouverte.

4. Procédé selon la revendication 1, 2 ou 3, **caractérisé en ce que** la soupape d'alimentation de gaz (17) qui est la seconde la plus éloignée du point d'alimentation de gaz (16) de la ligne d'entrée de gaz (12), est ouverte.

5. Procédé selon la revendication 1, 2 ou 3, **caractérisé en ce que** les cylindres (1) du moteur sont agencés en au moins une rangée de cylindres (11, 11') et que le cylindre (1) dont la soupape d'alimentation de gaz (17) est ouverte, est situé à une première extrémité (6, 6') de la rangée de cylindres (11, 11').

6. Procédé selon la revendication 5, **caractérisé en ce que** la soupape d'alimentation de gaz (17) du cylindre (1) qui est situé à une seconde extrémité (5, 5') de la rangée de cylindres (11, 11') en ouverte en plus.

7. Procédé selon l'une quelconque des revendications précédentes, **caractérisé en ce que** la soupape d'alimentation de gaz (17) est maintenue ouverte pendant une durée prédéterminée pendant le retrait d'air du récepteur de gaz (9), après quoi le moteur est prêt pour changer de mode de carburant du mode carburant liquide au mode gaz.

8. Procédé selon l'une quelconque des revendications 1-6, **caractérisé en ce que** l'événement de combustion dans le cylindre (1), dont la soupape d'alimentation de gaz (17) est ouverte pendant le retrait d'air du récepteur de gaz (9), est surveillé, et lorsque la surveillance indique que du carburant gazeux ayant une concentration en air inférieure à un niveau prédéterminé est déchargé du récepteur de gaz (9), le moteur est prêt pour changer de mode de carburant du mode carburant liquide au mode gaz.

9. Procédé selon l'une quelconque des revendications précédentes, **caractérisé en ce que** les cylindres (1) du moteur sont agencés en deux rangées de cylindres (11, 11') et que les cylindres (1), dont les soupapes d'alimentation de gaz (17) sont ouvertes, sont situés aux même extrémités (5, 5') des deux rangées de cylindres (11, 11').

10. Système d'alimentation de gaz (7) pour un moteur alternatif à système de carburation mixte, capable de fonctionner à la fois en mode gaz et en mode carburant liquide, le système d'alimentation de gaz (7) comprenant :
- un récepteur de gaz (9) pour recevoir du carburant gazeux d'une source de gaz (8),
- une ligne d'entrée de gaz (12) pour alimenter du gaz à partir de la source de gaz (8) vers l'intérieur du récepteur de gaz (9), laquelle ligne d'entrée de gaz (12) est dotée d'un robinet d'arrêt (13) pour ouvrir et fermer la communication d'écoulement entre la source de gaz (8) et le récepteur de gaz (9),
- une soupape d'alimentation de gaz (17) séparée pour chaque cylindre (1) du moteur, laquelle soupape d'alimentation de gaz (17) est agencée pour alimenter du carburant gazeux à partir du récepteur de gaz (9) vers l'intérieur d'un port d'entrée (10) du cylindre (1) pendant le fonctionnement en mode gaz, **caractérisé en ce que** le système d'alimentation de gaz (7) comprend en outre une unité de commande (20) qui est, avant de changer d'un mode carburant liquide à un mode gaz, configurée pour :
- ouvrir le robinet d'arrêt (13), et
- ouvrir au moins une soupape d'alimentation de gaz (17) pour retirer l'air du récepteur de gaz (9) et maintenir les autres soupapes d'alimentation de gaz (17) fermées.

11. Système d'alimentation de gaz (7) selon la revendication 10, **caractérisé en ce que** l'unité de commande (20) est configurée pour surveiller l'événement de combustion dans le cylindre (1) dont la soupape d'alimentation de gaz (17) est ouverte pendant le retrait d'air du récepteur de gaz (9), et pour préparer pour un changement de mode de carburant du mode carburant liquide au mode gaz lorsque la surveillance indique que du carburant gazeux ayant une concentration en air inférieure à un niveau prédéterminé est déchargé du récepteur de gaz (9).

12. Système selon la revendication 10 ou 11, **caractérisé en ce que** le point d'alimentation en gaz (16) de la ligne d'entrée de gaz (12) est situé à une extrémité (14) du récepteur de gaz (9).
